(19) Europäisches Patentamt
European Patent Office
Office européen des brevets

(11) **EP 2 162 326 B1**

(12) **EUROPÄISCHE PATENTSCHRIFT**

(45) Veröffentlichungstag und Bekanntmachung des Hinweises auf die Patenterteilung:
**19.10.2016 Patentblatt 2016/42**

(51) Int Cl.:
***B60T 8/17*** *(2006.01)*  ***B60T 17/18*** *(2006.01)*

(21) Anmeldenummer: **08758448.8**

(22) Anmeldetag: **09.05.2008**

(86) Internationale Anmeldenummer:
**PCT/EP2008/003765**

(87) Internationale Veröffentlichungsnummer:
**WO 2008/141740 (27.11.2008 Gazette 2008/48)**

(54) **VERFAHREN ZUR BEURTEILUNG DER KOMPATIBILITÄT VON BREMSANLAGEN EINER FAHRZEUGKOMBINATION UND VORRICHTUNG ZUR BEURTEILUNG DER KOMPATIBILITÄT**

METHOD FOR ASSESSING THE COMPATIBILITY OF BRAKING SYSTEMS OF A VEHICLE COMBINATION, AND COMPATIBILITY ASSESSMENT DEVICE

PROCÉDÉ D'ÉVALUATION DE LA COMPATIBILITÉ DE SYSTÈMES DE FREINAGE SUR UNE COMBINAISON DE VÉHICULES ET DISPOSITIF D'ÉVALUATION DE COMPATIBILITÉ

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **24.05.2007 DE 102007024310**

(43) Veröffentlichungstag der Anmeldung:
**17.03.2010 Patentblatt 2010/11**

(73) Patentinhaber: **WABCO GmbH**
**30453 Hannover (DE)**

(72) Erfinder:
• **HEISE, Bernd**
**30179 Hannover (DE)**
• **HOLST, Hans**
**30926 Seelze/Velber (DE)**
• **RONNENBERG, Udo**
**30900 Wedemark (DE)**
• **STENDER, Axel**
**31787 Hameln (DE)**
• **WITTE, Norbert**
**31867 Lauenau (DE)**

(56) Entgegenhaltungen:
**EP-A- 0 303 827  EP-A- 1 359 076**
**WO-A-2005/058665  DE-A1- 4 243 245**
**DE-A1- 19 519 768  DE-C1- 4 446 358**

**Beschreibung**

Die Erfindung betrifft ein Verfahren zur Beurteilung der Kompatibilität von Bremsanlagen einer Fahrzeugkombination, die ein Zugfahrzeug und ein Anhängefahrzeug aufweist, und eine Vorrichtung zur Beurteilung der Kompatibilität.

Bei einer derartigen Fahrzeugkombination ist es erwünscht, dass bei einem von dem Fahrer in dem Zugfahrzeug ausgelösten Bremsvorgang das Anhängefahrzeug die gleiche Verzögerung aufbringt wie das Zugfahrzeug. Mit anderen Worten, wenn das Anhängefahrzeug nicht mit dem Zugfahrzeug verbunden wäre, sollte es dennoch die gleiche Verzögerung aufweisen wie das Zugfahrzeug. Hiermit soll das Entstehen unerwünscht hoher Kopplungskräfte in der Kupplung zwischen dem Zugfahrzeug und dem Anhängefahrzeug vermieden werden. Zudem soll ein ungleichmäßiger Verschleiß der Bremsbeläge der beiden Fahrzeuge vermieden werden. Zur Beurteilung der Kompatibilität der Bremsanlagen des Zugfahrzeugs und des Anhängefahrzeugs hat man bisher Messungen an dem Fahrzeugzug auf einem Bremsenprüfstand durchgeführt und gegebenenfalls die Abstimmung der Bremsanlagen durch geeignete Anpassungsmaßnahmen an den Bremsanlagen verbessert.

Die Vermessung der Bremsanlagen des Zugfahrzeugs und des Anhängefahrzeugs auf einem Bremsenprüfstand ist relativ zeitaufwendig und teuer.

WO 2005/058665 A1 offenbart ein Verfahren zur Abschätzung des Reibungskoeffizienten zwischen einem Stator und einem Rotor einer Bremsvorrichtung. Das Verfahren sieht die Messung der Temperatur der Bremsvorrichtung und die Bestimmung der während eines Zeitintervalls einer Bremsoperation von dem Stator und dem Rotor generierten thermischen Energie vor. Des Weiteren wird die Bremsenergie, welche von dem Rotor und dem Stator während des Zeitintervalls absorbiert wird, abgeschätzt. Anhand der thermischen Energie und der Bremsenergie wird der Reibungskoeffizient bestimmt.

EP 1 359 076 A1 offenbart ein Verfahren und eine Anordnung zur Zuspannenergieregelung bei elektronisch geregelten Bremssystemen von Fahrzeugkombinationen aus wenigstens einem Zug- und Anhängefahr- Zeug, ggf. mit einer Einrichtung zur Koppelkraftregelung. Um bei einem Bremsvorgang die Gefahr einer Überhitzung und eines dadurch bedingten Ausfalls von Bremsen zu vermeiden, werden die Temperaturen der Radbremsen der Räder der Teilfahrzeuge ermittelt und fahrzeugweise miteinander und mit einem vorbestimmten Temperaturgrenzwert verglichen. Bei voneinander um wenigstens einen vorbestimmten Wert abweichenden Temperaturen und bei Überschreitung des Temperaturgrenzwertes durch die Temperaturen der Radbremsen wenigstens eines Teilfahrzeuges wird eine niedrigere Anhängefahrzeug-Zuspannenergie in die Radbremsen des Anhängefahrzeuges eingesteuert als vor dem Überschreiten des Temperaturgrenzwertes, wenn die Radbremsentemperaturen des Anhängefahrzeuges größer sind als die Radbremsentemperaturen des Zugfahrzeuges, und wird eine höhere Anhängefahrzeug-Zuspannenergie in die Radbremsen des Anhängefahrzeuges eingesteuert als vor dem Überschreiten des Temperaturgrenzwertes, wenn die Radbremsentemperaturen des Anhängefahrzeuges kleiner sind als die Radbremsentemperaturen des Zugfahrzeuges, oder wird eine niedrigere Zugfahrzeug-Zuspannenergie in die Radbremsen des Zugfahrzeuges eingesteuert als vor dem Überschreiten des Temperaturgrenzwertes, wenn die Radbremsentemperaturen des Zugfahrzeuges größer sind als die Radbremsentemperaturen des Anhängefahrzeuges, und wird eine höhere Zugfahrzeug- Zuspannenergie in die Radbremsen des Zugfahrzeuges eingesteuert als vor dem Überschreiten des Temperaturgrenzwertes, wenn die Radbremsentemperaturen des Zugfahrzeuges kleiner sind als die Radbremsentemperaturen des Anhängefahrzeuges. Bei einer ggf. vorhandenen Koppelkraftregelung wird diese deaktiviert oder wird durch die Koppelkraftregelung eine Koppelkraft geregelt, die nicht Null ist, sondern deren Größe von den temperaturbedingten Änderungen der Zuspannenergien der Teilfahrzeuge der Fahrzeugkombination abhängt.

DE 42 43 245 A1 offenbart ein Verfahren zur Abbremsung eines Fahrzeugzuges. Zur Erzielung eines genau stabilitätsoptimierten Abbremsens im gesamten Bremsbereich wird in einer ersten Lösung vorgeschlagen, aus der vertikalen Kupplungskraft und der Fahrzeugzugverzögerung eine horizontale Soll-Kupplungskraft zu berechnen und die Zuspannenergie des Anhängers so zu steuern, dass die sich einstellende horizontale Ist-Kupplungskraft sich der horizontalen Soll-Kupplungskraft angleicht. In einer zweiten und dritten Lösung wird vorgeschlagen, die Zuspannenergie des Anhängers so zu steuern, dass das Verhältnis der horizontalen Ist-Kupplungskraft zu der vertikalen Ist-Kupplungskraft sich dem Verhältnis der Fahrzeugzugverzögerung zur Erdbeschleunigung angleicht. Bevorzugtes Anwendungsgebiet sind Fahrzeugzüge des Typs Sattelzug im Straßenverkehr.

Der Erfindung liegt daher die Aufgabe zugrunde, ein einfaches und kostengünstiges Verfahren und eine Vorrichtung zur Beurteilung der Kompatibilität der Bremsanlagen eines Zugfahrzeugs und eines Anhängefahrzeugs zur Verfügung zu stellen.

Diese Aufgabe wird gelöst durch ein Verfahren zur Beurteilung der Kompatibilität von Bremsanlagen einer Fahrzeugkombination, wobei die Fahrzeugkombination ein Zugfahrzeug und ein Anhängefahrzeug aufweist, wobei eine aufgebrachte Bremsenergie eines Bremsvorgangs des Anhängefahrzeugs ermittelt wird und eine benötigte Bremsenergie des Bremsvorgangs des Anhängefahrzeugs ermittelt wird. Unter der aufgebrachten Bremsenergie des Anhängefahrzeugs ist die tatsächlich für den Bremsvorgang aufgewendete Bremsenergie in der Bremsanlage und Rädern des Anhängefahrzeugs zu verstehen. Unter der benötigten Bremsenergie des Anhängefahrzeugs ist die Bremsenergie zu verstehen, die theoretisch für den Bremsvorgang zur Bremsung des Anhängefahrzeugs erforderlich ist. Die aufgebrachte und benötigte Bremsenergie können z. B. anhand eines in der Fahrzeugkombination vorhandenen Steuergerätes durch die Auswertung von Messgrößen ermittelt und in dem Steuergerät gespeichert werden. Das Steuergerät kann, je nach Bedarf, in dem Zugfahrzeug oder in dem Anhängefahrzeug vorgesehen sein. Es ist auch möglich, in jedem der Fahrzeuge ein Steuergerät vorzusehen.

Die Erfindung hat den Vorteil, eine Beurteilung der Kompatibilität der Bremsanlagen eines Zugfahrzeugs und eines Anhängefahrzeugs nur durch Verwendung eines in dem Anhängefahrzeug ohnehin vorgesehenen Steuergerätes, z.B. des EBS-Steuergerätes, zu ermöglichen, ohne dass ein Bremsenprüfstand benötigt wird. Erforderlich ist lediglich eine Erweiterung der Funktionalität des Steuergerätes, z.B. durch Erweiterung der Software. Die Beurteilung der Kompatibilität kann dann im normalen Fahrbetrieb erfolgen.

Die Erfindung hat den weiteren Vorteil, bereits nach kurzem Fahrbetrieb der Fahrzeugkombination eine Aussage über die Kompatibilität der Bremsanlagen des Zugfahrzeugs und des Anhängefahrzeugs zueinander zu ermöglichen. Dies kann gegebenenfalls auch im laufenden Betrieb des Fahrzeuges per Ferndiagnose, z. B. über eine Telematik-Schnittstelle, geschehen. Hierdurch kann frühzeitig eine nicht ausreichende Abstimmung der Bremsanlagen erkannt werden, insbesondere bevor ein weitergehender Schaden durch Überhitzung oder übermäßigen Verschleiß der Bremsanlage auftritt, und somit frühzeitig eine Wartung der Fahrzeugkombination sowie eine Verbesserung der Abstimmung der Bremsanlagen eingeleitet werden.

In einer vorteilhaften Ausführung wird eine Größe zur Beurteilung der Kompatibilität in Abhängigkeit der aufgebrachten Bremsenergie und in Abhängigkeit der benötigten Bremsenergie ermittelt. Die Ermittlung der Größe kann in dem Steuergerät erfolgen.

In einer weiteren vorteilhaften Ausgestaltung der Erfindung wird die Größe abhängig von einem Quotienten aus der aufgebrachten Bremsenergie und der benötigten Bremsenergie ermittelt. Diese Ausgestaltung stellt eine besonders aussagekräftige Größe zur Beurteilung der Kompatibilität zur Verfügung. Ist die Größe kleiner 1, so ist das Anhängefahrzeug unterbremst, da die tatsächlich aufgebrachte Bremsenergie kleiner als die theoretisch benötigte Bremsenergie ist. Ist die Größe größer 1, so ist das Anhängefahrzeug überbremst, da die tatsächlich aufgebrachte Bremsenergie größer als die theoretisch benötigte Bremsenergie ist. Im Idealfall nimmt die Größe den Wert eins an.

In einer weiteren vorteilhaften Ausführung wird die aufgebrachte Bremsenergie in Abhängigkeit wenigstens einer Radumfangsgeschwindigkeit eines Rades des Anhängefahrzeuges und in Abhängigkeit wenigstens eines Bremszylinderdrucks eines Bremszylinders des Anhängefahrzeugs ermittelt. Mit der Radumfangsgeschwindigkeit ist die Radumfangsgeschwindigkeit eines anhand des Bremszylinders gebremsten Rades des Anhängefahrzeugs gemeint. Die Radumfangsgeschwindigkeit kann z. B. anhand von ABS-Sensoren bestimmt werden. Der Druck in dem Bremszylinder kann z. B. anhand eines Drucksensors bestimmt werden, der einem Modulator, der den Bremszylinder steuert, zugeordnet ist.

Gemäß einer weiteren Ausführung wird die aufgebrachte Bremsenergie anhand der Formel

$$W_{aj} = k \cdot T \cdot \sum_{i=1}^{n} (p_{Bji} - p_{AN}) \cdot v_{Rji}$$

bestimmt, wobei $W_{aj}$ die von einem Bremszylinder des Anhängefahrzeugs und einem mittels des Bremszylinders gebremsten Rades aufgebrachte Bremsenergie, k eine Konstante, T eine Abtastzeit eines in der Fahrzeugkombination vorhandenen Steuergerätes, $p_{Bji}$ der in dem Bremszylinder herrschende Druck, $p_{AN}$ einen Anlegedruck und $v_{Rji}$ eine Radumfangsgeschwindigkeit des von dem Bremszylinder gebremsten Rades bezeichnen. Mit $v_{Rji}$ ist die Radumfangsgeschwindigkeit des anhand des Bremszylinders gebremsten Rades des Anhängefahrzeugs gemeint. Der Anlegedruck ist der im Bremszylinder notwendige Druck zum Anlegen der Bremsbeläge an eine Scheibe oder Trommel, ohne dass es zu einem Kontakt zwischen den Bremsbelägen und der Scheibe oder Trommel kommt. Er beträgt üblicherweise ca. 0,5 bar.

In der oben stehenden Formel bezeichnen j und i Indizes. Der Index j stellt den Index für den jeweiligen Bremszylinder und der von dem Bremszylinder gebremsten Rad dar. Der Index i zeigt den für die Ermittlung von $p_{Bji}$ und $v_{Rji}$ zugehörigen Abtastzeitabschnitt der Abtastzeit T des Steuergerätes an. Für jeden während des Bremsvorgangs auftretenden Abtastzeitabschnitt werden der Bremsdruck $p_{Bji}$ und die Radumfangsgeschwindigkeit $v_{Rji}$ ermittelt. Die Dauer des Abtastzeitabschnittes entspricht der Dauer der Abtastzeit T. Er kann z. B. eine ms betragen. Für einen 2 s andauernden Bremsvorgang treten für dieses Beispiel somit 2000 Abtastzeitabschnitte während des Bremsvorgangs auf und in der oben stehenden Formel nimmt n den Wert 2000 an.

Üblicherweise weist ein Anhängefahrzeug mehrere Bremszylinder auf. Zur Ermittlung der aufgebrachten Bremsenergie werden die aufgebrachten Bremsenergien $W_{aj}$ aller Bremszylinder und der dazugehörigen Räder summiert.

Die Konstante k ist abhängig von der Auslegung der Bremsanlage des Anhängefahrzeugs. Für eine oft in der Praxis vorzufindende Auslegung kann k anhand folgender Formel bestimmt werden

$$k = \frac{m_{AbB} \cdot 0,55 \cdot g}{p_{max} - p_{AN}},$$

wobei $m_{AbB}$ die von einem Bremszylinder des Anhängefahrzeugs zu bremsende Masse bei voller Ausladung des Anhängefahrzeugs, g die Gravitationskonstante, $p_{AN}$ den Anlegedruck und $p_{max}$ den Druck in einem Bremszylinder bei einem Steuerdruck von 6,5 bar bezeichnen.

In einer weiteren Ausgestaltung wird die benötigte Bremsenergie anhand der Formel

$$W_b = \frac{m_A \cdot (v_{A1} - v_{An})^2}{2}$$

bestimmt, wobei $W_b$ die benötigte Bremsenergie, $m_A$ die Masse des Anhängefahrzeugs, $v_{A1}$ die Geschwindigkeit des Anhängefahrzeugs bei Beginn des Bremsvorgangs und $v_{An}$ die Geschwindigkeit des Anhängefahrzeugs nach Beendigung des Bremsvorgangs bezeichnen.

Gemäß einer vorteilhaften Weiterbildung der Erfindung wird die Größe anhand der für eine Mehrzahl von Bremsvorgängen ermittelten aufgebrachten Bremsenergien und der für die Mehrzahl der Bremsvorgänge ermittelten benötigten Bremsenergien ermittelt. Die bei den einzelnen Bremsvorgängen ermittelten Werte der Bremsenergien können hierzu z. B. in einem Speicher des Steuergerätes gespeichert werden. Hierdurch ist eine statistische Analyse der erfassten und gespeicherten Werte möglich, was den Vorteil hat, dass aussagekräftigere und genauere Ergebnisse für die Größe ermittelt werden können. Der Einfluss eines einzelnen Bremsvorganges auf die Größe wird durch diese Weiterbildung vermindert.

In einer vorteilhaften Ausgestaltung der Erfindung wird die Größe ausgegeben. Die Ausgabe kann z. B. visuell oder akustisch erfolgen. Die visuelle Darstellung der Größe kann z. B. auf einem im Armaturenbrett der Fahrzeugkombination vorgesehenen Display erfolgen. Es ist ebenfalls denkbar, bei ermittelten Größen, die außerhalb eines erwünschten Wertebereichs liegen, eine Warnlampe automatisch einzuschalten. Eine weitere Möglichkeit die Größe visuell darzustellen, besteht darin ein Diagnosegerät an das Steuergerät anzuschließen und die Größe auszulesen und darzustellen.

Bezüglich der Ermittlung der aufgebrachten und benötigten Bremsenergie und/oder der Größe sind verschiedene Verfahrensweisen denkbar. In einer ersten vorteilhaften Ausgestaltung kann die Ermittlung und Speicherung der aufgebrachten und benötigten Bremsenergie und/oder der Größe autark in einem in der Fahrzeugkombination vorhandenem Steuergerät erfolgen. In einer zweiten Ausgestaltung erfolgt in einem in der Fahrzeugkombination vorhandenen Steuergerät lediglich eine Ermittlung der bei Bremsvorgängen auftretenden Bremszylinderdrücke, Radumfangsgeschwindigkeiten und Geschwindigkeiten des Anhängefahrzeugs. Diese werden dann bei Bedarf, z. B. bei einem Werkstattaufenthalt oder bei einem Spediteur mittels eines Diagnosegeräts oder eines Laptop ausgelesen und sodann in dem Diagnosegerät bzw. dem Laptop derart verarbeitet, dass die aufgebrachten und benötigten Bremsenergien und/oder die Größe berechnet und visuell dargestellt werden.

Gemäß einer weiteren vorteilhaften Weiterbildung werden die aufgebrachte Bremsenergie und die benötigte Bremsenergie und/oder die Größe anhand einer Telematik-Schnittstelle an eine Empfangseinheit übertragen. Die Übertragung kann z. B. während des normalen Fahrbetriebs der Fahrzeugkombination über eine drahtlose Datenverbindung erfolgen. Bei der Empfangseinheit kann es sich beispielsweise um einen mit dem Internet verbundenen Server handeln. Die Auswertung der übertragenen Daten kann dann beispielsweise von einem mit dem Internet verbundenen Personal Computer durchgeführt werden, der auf die auf dem Server gespeicherten Daten zugreift.

Wie hieraus erkennbar ist, kann die Ermittlung der Größe an verschiedenen Stellen vorteilhaft durchgeführt werden.

In einer anderen Ausführung erfolgen die Ermittlung der aufgebrachten Bremsenergie und der benötigten Bremsenergie und/oder die Ermittlung der Größe während des normalen Fahrbetriebs der Fahrzeugkombination. Unter normalem Fahrbetrieb ist der Betrieb der Fahrzeugkombination auf einer Straße zu verstehen. Für die Ermittlung wird also kein Bremsenprüfstand benötigt.

In einer weiteren Ausgestaltung erfolgen die Ermittlung der aufgebrachten Bremsenergie und der benötigten Bremsenergie und/oder die Ermittlung der Größe automatisch. Die automatische Ermittlung kann z. B. in einem in der Fahrzeugkombination vorhandenen Steuergerät durchgeführt werden.

Gemäß einer Weiterbildung wird ein Bremsvorgang, der auf einer Fahrbahn, deren Längsneigung einen bestimmten Grenzwert überschreitet, stattfindet, nicht zur Ermittlung der Größe berücksichtigt. Hierdurch wird der Einfluss von Fahrbahnsteigung bzw. -gefälle auf die Ermittlung der Größe vermieden. Das Auftreten einer solchen Fahrbahnlängsneigung kann z. B. von einem in der Fahrzeugkombination vorgesehenen Satelliten-Navigationssystem, in welchem Informationen über die Fahrbahnlängsneigung gespeichert sind, detektiert werden.

Vorteilhafterweise wird der Bremsvorgang, der auf einer Fahrbahn, deren Längsneigung einen bestimmten Grenzwert überschreitet, stattfindet, durch einen vor dem Bremsvorgang erfassten Geschwindigkeitsgradienten erkannt. Der Geschwindigkeitsgradient kann z. B. mittels in der Fahrzeugkombination vorhandener ABS-Sensoren bestimmt werden.

Gemäß einer Weiterbildung kann eine Abstimmung der Bremsanlagen der Fahrzeugkombination in Abhängigkeit der Größe erfolgen. So können z. B. in der Fahrzeugkombination auftretende Bremsdrücke und/oder Druckvoreilungen an Ventilen der Fahrzeugkombination in Abhängigkeit der Größe verändert werden.

Gemäß einer Weiterbildung erfolgt eine Speicherung der aufgebrachten Bremsenergie und der benötigten Bremsenergie in einem in der Fahrzeugkombination vorhandenen Steuergerät und die aufgebrachte Bremsenergie und die benötigte Bremsenergie können über eine Schnittstelle ausgelesen werden.

Des Weiteren beinhaltet die Erfindung eine Vorrichtung zur Beurteilung der Kompatibilität von Bremsanlagen einer Fahrzeugkombination, wobei die Fahrzeugkombination ein Zugfahrzeug und ein Anhängefahrzeug aufweist, gekennzeichnet durch Mittel, die eine aufgebrachte Bremsenergie eines Bremsvorgangs des Anhängefahrzeugs ermitteln und eine benötigte Bremsenergie des Bremsvorgangs des Anhängefahrzeugs ermitteln.

Ausführungsbeispiele der Erfindung werden im Folgenden anhand der schematischen Zeichnung erläutert. Es zeigen:

Fig. 1 Bremsanlagen einer Fahrzeugkombination mit einem Zugfahrzeug und einem Anhängefahrzeug und

Fig. 2 ein Flussdiagramm des erfindungsgemäßen Verfahrens zur Ermittlung der Größe zur Beurteilung der Kompatibilität der Bremsanlagen.

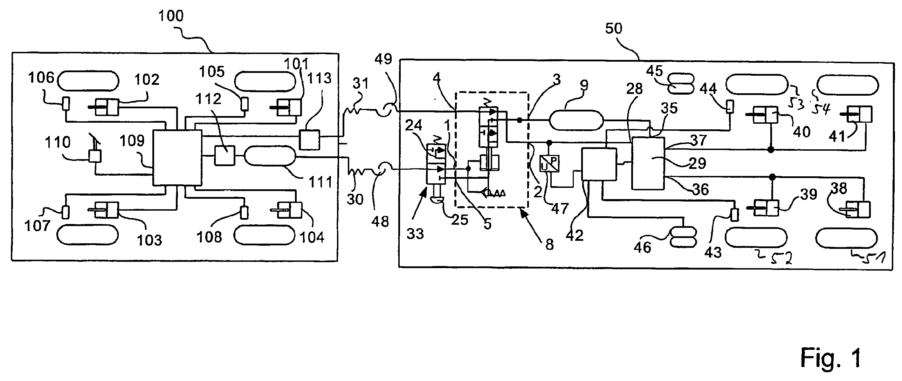

Gemäß Fig. 1 sind Bremsanlagen eines Zugfahrzeugs 100 und eines Anhängefahrzeugs 50 schematisch dargestellt.

Der Darstellung der Bremsanlage des Anhängefahrzeugs 50 ist die Konfiguration einer Basisvariante für mit einem EBS-System ausgestatteten Anhängefahrzeugen zugrunde gelegt, welche aus einem als Sattelauflieger ausgebildeten Zugfahrzeug 100 mit zwei Achsen besteht, es handelt sich hier um ein 2S/2M-System [zwei ABS-Sensoren für zwei Räder und zwei Modulatorkanäle für die Radbremsen der linken bzw. der rechten Seite]; die ABS-Bremsdruckregelung wird also seitenweise durchgeführt.

Das Anhängefahrzeug 50 ist mit dem Zugfahrzeug 100 pneumatisch über zwei Druckschläuche verbunden, nämlich über einen Vorrats-Druckschlauch 30 zur Übertragung des Versorgungsdruckes [am Zugfahrzeug 100 befestigter roter Druckschlauch, der über den "roten Kupplungskopf" 48 des Anhängefahrzeugs 50 angekuppelt ist] und über einen Bremsdruckschlauch 31 zur Übertragung des Bremsdruckes [am Zugfahrzeug 100 befestigte gelber Druckschlauch, der über den "gelben Kupplungskopf" 49 des Anhängefahrzeugs 50 angekuppelt ist]. Auf der Seite des Zugfahrzeuges 100 ist sowohl der rote Druckschlauch als auch der gelbe Druckschlauch pneumatisch an ein Anhängersteuerventil 113 angeschlossen.

Auf der Seite des Anhängefahrzeugs 50 ist der Vorrats-Druckschlauch 30 pneumatisch über ein unten erläutertes, optionales Löseventil 33 mit einem Versorgungsanschluss 1 eines Sicherheitsventils 8 verbunden. Der Bremsdruckschlauch 31 ist über eine Pneumatikleitung mit einem Bremsvorgabeanschluss 4 des Sicherheitsventils 8 verbunden. Das Sicherheitsventil 8 verfügt weiter über einen Behälteranschluss 3, an dem der Vorrats-Druckbehälter 9 für das Anhängefahrzeug 50 angeschlossen ist, und über einen Bremsdruckanschluss 2, an dem der pneumatische Bremsdruck an den pneumatischen Eingang 28 eines pneumatischen Bremsdruckmodulators 29 ausgegeben wird; dieser Bremsdruck stellt für das Anhängefahrzeug 50 mit seiner elektronischen Bremsdruckregelung den pneumatischen Steuerdruck dar.

Das Löseventil 33 dient dazu, ein vom Zugfahrzeug 100 entkoppeltes Anhängefahrzeug 50 zu bewegen, indem die automatische Bremsung durch das Sicherheitsventil 8 außer Kraft gesetzt wird. Dies geschieht dadurch, dass in einer manuell über einen Betätigungsknopf 25 einstellbaren Lösestellung der Druck des Behälters 9 umgelenkt und am Versorgungsanschluss 1 in das Sicherheitsventil 8 eingespeist wird [in Fig. 1 vom Löseanschluss 5 über den Druckkanal 24 zum Versorgungsanschluss 1]; durch diese Druckumlenkung wird im Sicherheitsventil 8 simuliert, dass am Kupplungskopf für den Vorrats-Druckschlauch Druck anliegt.

Bei dem Anhängefahrzeug 50 mit der elektronischen Bremsdruckregelung wird in allen denkbaren Fällen, in denen eine Bremsung stattfinden soll, am Bremsdruckanschluss 2 ein entsprechender pneumatischer Steuerdruck ausgesteuert. Bei normalen Bremsvorgängen gilt dies, da das Anhängefahrzeug 50 natürlich mit jeder Art von entsprechend zugelassenen Zugfahrzeugen 100 zu koppeln sein muss, sowohl für den Fall, dass das Zugfahrzeug 100 über eine elektronische Bremsregelung verfügt, als auch für den Fall, dass das Zugfahrzeug 100 mit einer konventionellen pneumatischen Bremsanlage ausgerüstet ist. Bei einem Zugfahrzeug 100 mit elektronischer Bremsregelung wird ein Bremsvorgang durch Betätigung des zum Regelsystem gehörenden Bremswertgebers eingeleitet, während dies bei einem konventionellen Zugfahrzeug 100 durch Betätigung des entsprechenden Motorwagen-Bremsventils erfolgt.

Beim Zugfahrzeug 100 mit elektronischer Bremsregelung, bei dem im Normalfall natürlich der von der elektronischen Anhängefahrzeug-Bremsregelung eingestellte Bremsdruck durch das vom Zugfahrzeug 100 über eine elektrische Schnittstelle 32 [ISO 7638/CAN] zum Anhängefahrzeug 50 übertragene elektrische Bremsanforderungs-Signal bestimmt ist, wird der pneumatische Steuerdruck im Anhängefahrzeug 50 im Fehlerfall zum Bremsen herangezogen, wenn nämlich die Zugfahrzeug-Elektronik ausgefallen ist. Bei Verwendung eines konventionell gebremsten Zugfahrzeugs 100 dient der pneumatische Steuerdruck im Anhängefahrzeug 50 zur Bremsung des Anhängefahrzeugs 50 überhaupt, da ein derartiges Zugfahrzeug 100 die elektronische Bremsdruckregelung im Anhängefahrzeug 50 nicht ansprechen kann. Die Umsetzung des pneumatischen Bremssignals in ein elektronisches Signal erfolgt durch einen Drucksensor 47 im Anhängefahrzeug 50.

Außer diesen normalen Bremsvorgängen wird auch vom Sicherheitsventil 8 ein Vollbremsdruck zum Bremsdruckmodulator 29 durchgesteuert, der eine rein pneumatische Bremsung ohne Zutun der Elektronik erlaubt. Bei Abriss einer der beiden Pneumatikleitungen zwischen Zugfahrzeug 100 und Anhängefahrzeug 50, oder bei nicht gekuppeltem rotem Kupplungskopf, wird in bekannter Weise durch das Zusammenwirken zwischen Anhängersteuerventil 113 im Zugfahrzeug 100 und Sicherheitsventil 8 eine Zwangsbremsung mittels des Behälterdruckes ausgelöst, indem, wie unten erläutert, in diesem Fall im Sicherheitsventil 8 der Behälteranschluss 3 pneumatisch mit dem Bremsdruckanschluss 2 verbunden wird.

Zusammenfassend kann gesagt werden, dass in allen Fällen, in denen eine Bremsung des Anhängefahrzeugs 50 erforderlich ist, sei dies eine normale Bremsung oder eine Zwangsbremsung, vom Sicherheitsventil 8 am Bremsdruckanschluss 2 ein Druck, entweder der pneumatische Steuerdruck oder der Behälterdruck ausgegeben wird, welcher dem pneumatischen Bremsdruckmodulator 29 zugeführt wird.

Der Bremsdruckmodulator 29 verfügt weiter über einen Druckversorgungsanschluss 35, der durch eine Pneumatikleitung mit dem Vorrats-Druckbehälter 9 verbunden ist. Der Bremsdruckmodulator 29 wird über elektrische Verbindungen durch ein Steuergerät 42 gesteuert.

Der pneumatische Bremsdruckmodulator 29 ist in bekannter Weise als zweikanaliges Druckregelmodul aufgebaut. Hierbei ist für beide Kanäle ein gemeinsames 3/2-Magnetventil als Umschaltventil für weitere kanalspezifische Belüftungs- und Entlüftungs-Magnetventile vorgesehen, welche für den Fall der EBS-Bremsdruckregelung mit einer taktenden Betriebsweise Pilot-Bremsdrücke je Kanal aussteuern, die wiederum an Steuereingänge von pro Kanal vorgesehenen Relaisventilen angelegt sind. Die Relaisventil-Arbeitsanschlüsse sind mit den Zylinder-Bremsleitungen 36 für die in Fahrtrichtung auf der linken Fahrzeugseite angeordneten Bremszylinder 38 und 39, bzw. mit den Zylinder-Bremsleitungen 37 für die in Fahrtrichtung auf der rechten Fahrzeugseite angeordneten Bremszylinder 40 und 41 verbunden.

Auf diese Weise wird im Rahmen der EBS-Bremsdruckregelung auch eine beladungsabhängige Bremskraftverteilung vorgenommen. Hierzu ist - es wird von einem luftgefederten Auflieger mit Luftfederbälgen 45 auf der linken und 46 auf der rechten Fahrzeugseite ausgegangen - der Luftfederbalg 46 auf der rechten Seite mit einem Drucksensor versehen, dessen Druckmesswert dem Steuergerät 42 zur Verfügung steht. Das Steuergerät 42 modifiziert die ausgesteuerten Bremsdrücke beladungsabhängig unter Verwendung dieses die Beladung des Fahrzeugs repräsentierenden Druckmesswertes.

Das Steuergerät 42 verwendet für die EBS-Bremsdruckregelung auch den Druckmesswert des Drucksensors 47, der den am Bremsdruckanschluss 2 ausgegebenen Bremsdruck des Sicherheitsventils 8 darstellt. Dieser Druckmesswert ist für den Fall eines konventionellen Zugfahrzeuges 100 vorgesehen, bei dem das Steuergerät 42 den elektrischen Druckmesswert als elektrisches Bremsanforderungssignal für die EBS-Bremsdruckregelung benutzt.

Der Vollständigkeit halber sei ergänzt, dass die ABS-Bremsregelung auch durch die Einrichtungen der EBS-Bremsdruckregelung durchgeführt werden kann; hierzu sind entsprechend Fig. 1 am linken Rad des Bremszylinders 39 ein ABS-Sensor 43 und am Rad des rechten Bremszylinders 40 ein ABS-Sensor 44 vorgesehen.

Die Bremsanlage des Zugfahrzeugs 100 weist jeweils einen Bremszylinder 101, 104 zur Betätigung der Bremsen der Hinterachse auf, sowie jeweils einen Bremszylinder 102, 103 zur Betätigung der Bremsen der Vorderachse.

Des Weiteren sind zur Erfassung der Drehgeschwindigkeiten der Fahrzeugräder ABS-Sensoren 105, 106, 107, 108 vorgesehen. Die ABS-Sensoren 105, 106, 107, 108 sind über elektrische Leitungen an ein elektrisches Bremssteuersystem 109 angeschlossen. Das elektrische Bremssteuersystem 109 weist eine Elektronik zur Auswertung der Sensorsignale sowie zur Ansteuerung von pneumatischen Ventilen auf, die ebenfalls Bestandteil des Steuersystems

109 sind. Die Ventile des Bremssteuersystems 109 sind über pneumatische Leitungen mit den Bremszylindern 101, 102, 103, 104 verbunden. Die elektronische Steuerung des Bremssteuersystems 109 führt eine automatische Einstellung und Regelung der Bremsdrücke in den Bremszylindern 101, 102, 103, 104 nach Maßgabe eines über einen Bremswertgeber 110 ermittelten Bremsbetätigungswunschs des Fahrers sowie unter Auswertung der Signale der ABS-Sensoren 105, 106, 107, 108 durch. Des Weiteren steuert das Bremssteuersystem 109 das Anhängerbremsventil 113 sowie eine Drucklufterzeugungsanlage 112. Die Drucklufterzeugungsanlage 112 weist unter anderem einen Kompressor sowie eine eigene elektronische Steuerung auf, welche die Steuerung des Kompressors je nach Druckluftbedarf derart durchführt, dass in einem an die Drucklufterzeugungsanlage 112 angeschlossenen Druckluftvorratsbehälter 111 jederzeit ein ausreichender Druckluftvorrat gehalten wird. Der Druckluftvorratsbehälter 111 ist über den Bremsdruckschlauch 30 mit dem roten Kupplungskopf 48 verbunden.

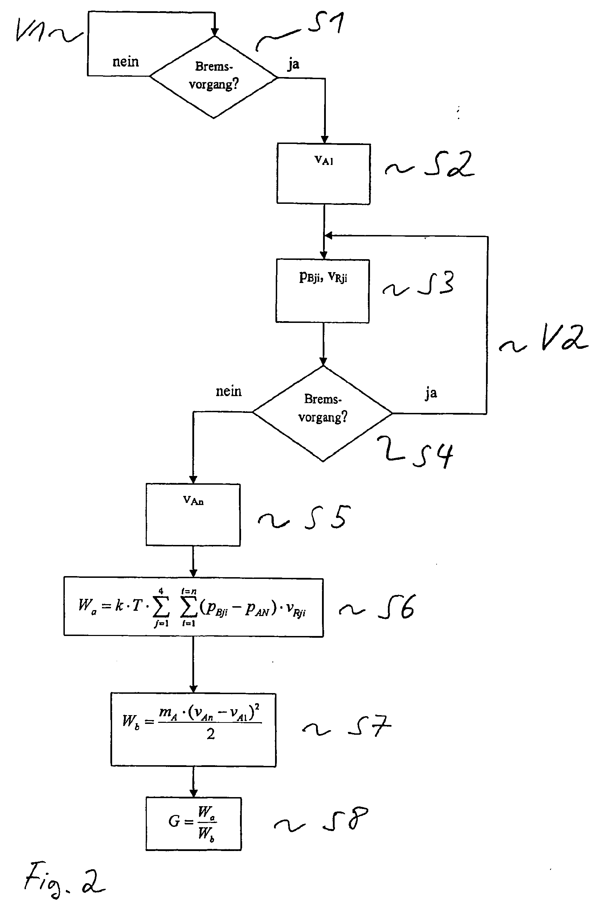

Nachfolgend wird davon ausgegangen, dass das im Folgenden beschriebene Verfahren zur Ermittlung einer Größe zur Beurteilung der Kompatibilität der Bremsanlagen in dem Steuergerät 42 des Anhängefahrzeugs 50 ausgeführt wird. In Fig. 2 ist eine Ausführung des erfindungsgemäßen Verfahrens zur Ermittlung einer Größe zur Beurteilung der Kompatibilität der Bremsanlagen der in Fig. 1 gezeigten Fahrzeugkombination als Flussdiagramm dargestellt. Zu Beginn des Verfahrens wird in einem Schritt S1 geprüft, ob ein Bremsvorgang vorliegt. Als Kriterium für das Vorliegen eines Bremsvorgangs kann z. B. die Betätigung des Bremspedals 110 verwendet werden. Falls kein Bremsvorgang vorliegt, erfolgt über eine Verzweigung V1 eine Prüfung, ob ein Bremsvorgang vorliegt gemäß Schritt S1. Falls ein Bremsvorgang detektiert wird, erfolgt in einem Schritt S2 eine Ermittlung der Geschwindigkeit $v_{A1}$ des Anhängefahrzeugs 50 zu Beginn des Bremsvorgangs und eine Speicherung der Geschwindigkeit $v_{A1}$ in einem Speicher des Steuergerätes 42. Mit der Geschwindigkeit $v_{a1}$ ist die Geschwindigkeit des Anhängefahrzeugs 50 in Richtung der Längsachse des Anhängefahrzeugs 50 gemeint. Die Geschwindigkeit $v_{A1}$ kann z. B. anhand eines in dem Zufahrzeug 100 vorhandenen Tachometers oder anhand der Signale der ABS-Sensoren 44, 46 ermittelt werden.

In einem darauf folgenden Schritt S3 werden die in den Bremszylindern 38-41 auftretenden Bremsdrücke $p_{Bji}$, sowie die Radumfangsgeschwindigkeiten $v_{Rji}$ der von den Bremszylindern 38-41 gebremsten Rädern 51-54 ermittelt und in dem Speicher des Steuergerätes 42 gespeichert. Hierbei bezeichnen j und i Indizes. Der Index j stellt den Index für den jeweiligen Bremszylinder 38-41 und das von dem Bremszylinder 38-41 gebremste Rad 51-54 dar. Der Index i zeigt den für die Ermittlung von $p_{Bji}$ und $v_{Rji}$ zugehörigen Abtastzeitabschnitt einer Abtastzeit T des Steuergerätes 42 an. D. h. in dem Schritt S3 werden die Bremsdrücke $p_{bji}$ in allen Bremszylindern 38-41 des Anhängefahrzeugs 50 und die Radumfangsgeschwindigkeiten $v_{Rji}$ der dazugehörigen Räder 51-54 ermittelt.

Die Bremsdrücke $p_{Bji}$ können z. B. anhand des von dem Zugfahrzeug 100 vorgegebenen pneumatischen Steuerdrucks oder anhand der Signale von in dem Modulator 29 vorhandener, nicht in Fig. 1 eingezeichneter, Drucksensoren bestimmt werden. Die Radumfangsgeschwindigkeiten $v_{Rji}$ können z. B. anhand der Signale der ABS-Sensoren 43, 44 bestimmt werden.

In einem folgenden Schritt S4 wird geprüft, ob der Bremsvorgang andauert. Die Prüfung kann z. B. anhand der Betätigung des Bremspedals 110 erfolgen. Falls der Bremsvorgang andauert, wird in einer Verzweigung V2 auf den Schritt S3 verwiesen und erneut in dem Schritt S3 die in den Bremszylindern 38-41 auftretenden Bremsdrücke $p_{Bji}$, sowie die Radumfangsgeschwindigkeiten $v_{Rji}$ der von den Bremszylindern 38-41 gebremsten Rädern 51-54 ermittelt und in dem Speicher des Steuergerätes 42 gespeichert. Durch die Verzweigung V2 wird sichergestellt, dass für jeden während des Bremsvorgangs auftretenden Abtastzeitabschnitt die Bremsdrücke $p_{Bji}$ und die Radumfangsgeschwindigkeiten $v_{Rji}$ ermittelt und gespeichert werden.

Falls der Bremsvorgang nicht mehr andauert, wird in einem Schritt S5 eine Geschwindigkeit $v_{An}$ des Anhängefahrzeugs 50 nach Beendigung des Bremsvorgangs ermittelt und eine Speicherung der Geschwindigkeit $v_{An}$ in dem Speicher des Steuergerätes 42 durchgeführt. Mit der Geschwindigkeit $v_{an}$ ist die Geschwindigkeit des Anhängefahrzeugs 50 in Richtung der Längsachse des Anhängefahrzeugs 50 gemeint. Die Geschwindigkeit $v_{An}$ kann z. B. anhand eines in dem Zufahrzeug 100 vorhandenen Tachometers oder anhand der Signale der ABS-Sensoren 43, 44 ermittelt werden.

Anschließend wird in einem Schritt S6 die aufgebrachte Bremsenergie $W_a$ gemäß der in S6 angegebenen Formel ermittelt, wobei k eine Konstante und T eine Abtastzeit des Steuergerätes 42 und $p_{AN}$ einen Anlegedruck bezeichnen. Der Anlegedruck $p_{AN}$ ist der in einem Bremszylinder 48-41 notwendige Druck zum Anlegen der Bremsbeläge an eine Scheibe oder Trommel ohne das es zu einem Kontakt zwischen den Bremsbelägen und der Scheibe oder Trommel kommt. Er beträgt üblicherweise ca. 0,5 bar. Die aufgebrachte Bremsenergie $W_a$ wird anhand zweier Summen bestimmt. Zum einen die Summe von i=1 bis i=n über die verschiedenen Abtastzeitabschnitte, wobei n die Anzahl der während des Bremsvorgangs auftretenden Abtastzeitabschnitte bezeichnet. Zum anderen die Summe über alle in dem Anhängefahrzeug 50 vorhandenen Bremszylinder 38-41.

Die Konstante k ist abhängig von der Auslegung der Bremsanlage des Anhängefahrzeugs 50. Die Konstante k kann anhand folgender Formel bestimmt werden

$$k = \frac{m_{AbB} \cdot 0{,}55 \cdot g}{p_{max} - p_{AN}},$$

wobei $m_{AbB}$ die von einem Bremszylinder 38-41 des Anhängefahrzeugs 50 zu bremsende Masse bei voller Ausladung des Anhängefahrzeugs 50, g die Gravitationskonstante, $p_{AN}$ den Anlegedruck und $p_{max}$ den Druck in einem Bremszylinder 38-41 bei einem Steuerdruck von 6,5 bar bezeichnen.

In einem darauf folgenden Schritt S7 wird die benötigte Bremsenergie $W_b$ anhand der in S7 angegebenen Formel bestimmt, wobei $m_A$ die Masse des Anhängefahrzeugs 50 bezeichnet. In einem Schritt S8 wird schließlich die Größe G zur Beurteilung der Kompatibilität der Bremsanlagen der Fahrzeugkombination anhand des Quotienten aus $W_a$ und $W_b$ bestimmt. Ist die Größe G kleiner 1, so ist das Anhängefahrzeug 50 unterbremst, da die tatsächlich aufgebrachte Bremsenergie $W_a$ kleiner als die theoretisch benötigte Bremsenergie $W_b$ ist. Ist die Größe G größer 1, so ist das Anhängefahrzeug 50 überbremst, da die tatsächlich aufgebrachte Bremsenergie $W_a$ größer als die theoretisch benötigte Bremsenergie $W_b$ ist. Im Idealfall nimmt die Größe G den Wert eins an.

Die Ermittlung der aufgebrachten Bremsenergie $W_a$ und der benötigten Bremsenergie $W_b$ und die Ermittlung der Größe G erfolgt automatisch anhand von in dem Steuergerät 42 hinterlegter Algorithmen.

In dem dargelegten Ausführungsbeispiel erfolgt die Ermittlung der aufgebrachten Bremsenergie $W_a$ und der benötigten Bremsenergie $W_b$ und/oder die Ermittlung der Größe G während des normalen Fahrbetriebs der Fahrzeugkombination. Unter normalem Fahrbetrieb ist der Betrieb der Fahrzeugkombination auf einer Straße zu verstehen. Für die Ermittlung wird also kein Bremsprüfstand benötigt.

Gemäß einer vorteilhaften Weiterbildung der Erfindung wird die Größe G anhand der für eine Mehrzahl von Bremsvorgängen ermittelten aufgebrachten Bremsenergien $W_a$ und der für die Mehrzahl der Bremsvorgänge ermittelten benötigten Bremsenergien $W_b$, z. B. durch Mittelwertbildung, ermittelt. Die bei den einzelnen Bremsvorgängen ermittelten Werte der Bremsenergien können hierzu in einem Speicher des Steuergerätes 42 gespeichert werden. Hierdurch ist eine statistische Analyse der erfassten und gespeicherten Werte möglich, was den Vorteil hat, dass aussagekräftigere und genauere Ergebnisse für die Größe G ermittelt werden können. Der Einfluss eines einzelnen Bremsvorganges auf die Größe G wird durch diese Weiterbildung vermindert.

In einer weiteren vorteilhaften Ausgestaltung der Erfindung wird die Größe G ausgegeben. Die Ausgabe kann z. B. visuell oder akustisch erfolgen. Die visuelle Darstellung der Größe kann z. B. auf einem im Armaturenbrett der Fahrzeugkombination vorgesehenen Display erfolgen. Es ist ebenfalls denkbar, bei ermittelten Größen G, die außerhalb eines erwünschten Wertebereichs liegen, eine Warnlampe automatisch einzuschalten. Eine weitere Möglichkeit die Größe G visuell darzustellen, besteht darin, ein Diagnosegerät an das Steuergerät 42 anzuschließen und die Größe G auszulesen und darzustellen.

Gemäß einer weiteren vorteilhaften Weiterbildung werden die aufgebrachte Bremsenergie $W_a$ und die benötigte Bremsenergie $W_b$ und die Größe G anhand einer Telematik-Schnittstelle an eine Empfangseinheit übertragen. Die Übertragung kann z. B. während des normalen Fahrbetriebs der Fahrzeugkombination über eine drahtlose Datenverbindung erfolgen. Bei der Empfangseinheit kann es sich beispielsweise um einen mit dem Internet verbundenen Server handeln. Die Auswertung der übertragenen Daten kann dann beispielsweise von einem mit dem Internet verbundenen Personal Computer durchgeführt werden, der auf die auf dem Server gespeicherten Daten zugreift.

Gemäß einer Weiterbildung wird ein Bremsvorgang der auf einer Fahrbahn mit Längsneigung stattfindet, nicht zur Ermittlung der Größe G berücksichtigt. Hierdurch wird der Einfluss von Fahrbahnsteigung bzw. -gefälle auf die Ermittlung der Größe G vermieden. Das Auftreten einer Fahrbahnlängsneigung kann z. B. von einem in der Fahrzeugkombination vorgesehenen Satelliten-Navigationssystem, in welchem Informationen über die Fahrbahnlängsneigung gespeichert sind, detektiert werden.

Vorteilhafterweise wird der Bremsvorgang, der auf einer Fahrbahn mit Längsneigung stattfindet, durch einen vor dem Bremsvorgang erfassten Geschwindigkeitsgradienten erkannt. Der Geschwindigkeitsgradient kann z. B. mittels in der Fahrzeugkombination vorhandener ABS-Sensoren 43, 44, 105-108 bestimmt werden.

Gemäß einer Weiterbildung kann eine Abstimmung der Bremsanlagen der Fahrzeugkombination in Abhängigkeit der Größe G erfolgen. So können z. B. in der Fahrzeugkombination auftretende Bremsdrücke und/oder Druckvoreilungen an Ventilen der Fahrzeugkombination in Abhängigkeit der Größe G verändert werden.

**Patentansprüche**

1. Verfahren zur Beurteilung der Kompatibilität von Bremsanlagen einer Fahrzeugkombination, wobei die Fahrzeugkombination ein Zugfahrzeug (100) und ein Anhängefahrzeug (50) aufweist, wobei eine aufgebrachte Bremsenergie ($W_a$) eines Bremsvorgangs des Anhängefahrzeugs (50) ermittelt wird, **dadurch gekennzeichnet, dass** eine benötigte Bremsenergie ($W_b$) des Bremsvorgangs des Anhängefahrzeugs (50) ermittelt wird.

2. Verfahren nach Anspruch 1, **dadurch gekennzeichnet, dass** eine Größe (G) zur Beurteilung der Kompatibilität in Abhängigkeit der aufgebrachten Bremsenergie ($W_a$) und in Abhängigkeit der benötigten Bremsenergie ($W_b$) ermittelt wird.

3. Verfahren nach Anspruch 2, **dadurch gekennzeichnet, dass** die Größe (G) in Abhängigkeit eines Quotienten aus der aufgebrachten Bremsenergie ($W_a$) und der benötigten Bremsenergie ($W_b$) ermittelt wird.

4. Verfahren nach Anspruch 1, 2 oder 3, **dadurch gekennzeichnet, dass** die aufgebrachte Bremsenergie ($W_a$) in Abhängigkeit wenigstens einer Radumfangsgeschwindigkeit ($v_{Rji}$) eines Rades des Anhängefahrzeuges (51-54) und wenigstens eines Bremszylinderdrucks ($p_{Bji}$) eines Bremszylinders (38-41) des Anhängefahrzeugs (50) ermittelt wird.

5. Verfahren nach Anspruch 4, **dadurch gekennzeichnet, dass** die aufgebrachte Bremsenergie ($W_a$) anhand der Formel

$$W_{aj} = k \cdot T \cdot \sum_{i=1}^{n} (p_{Bji} - p_{AN}) \cdot v_{Rji}$$

Bestimmt wird, wobei $W_{aj}$ die von einem Bremszylinder (38-41) des Anhängefahrzeugs (50) und einem mittels des Bremszylinders (38-41) gebremsten Rades (51-54) aufgebrachte Bremsenergie, k eine Konstante, T eine Abtastzeit eines in der Fahrzeugkombination vorhandenen Steuergerätes (42), $p_{Bji}$

der in dem Bremszylinder (38-41) herrschende Druck, p_AN einen Anlegedruck und v_Rji eine Radumfangsgeschwindigkeit des von dem Bremszylinder (38-41) gebremsten Rades (51-54) bezeichnen.

**6.** Verfahren nach einem der vorherigen Ansprüche, **dadurch gekennzeichnet, dass** die benötigte Bremsenergie (W_b) anhand der Formel

$$W_b = \frac{m_A \cdot (v_{An} - v_{A1})^2}{2}$$

bestimmt wird, wobei W_b die benötigte Bremsenergie, m_A die Masse des Anhängefahrzeugs (50), v_{A1} die Geschwindigkeit des Anhängefahrzeugs (50) bei Beginn des Bremsvorgangs und v_{An} die Geschwindigkeit des Anhängefahrzeugs (50) nach Beendigung des Bremsvorgangs bezeichnen.

**7.** Verfahren nach einem der vorherigen Ansprüche 2 bis 6, **dadurch gekennzeichnet, dass** die Größe (G) anhand der für eine Mehrzahl von Bremsvorgängen ermittelten aufgebrachten Bremsenergien (W_a) und der für die Mehrzahl der Bremsvorgänge ermittelten benötigten Bremsenergien (W_b) ermittelt wird.

**8.** Verfahren nach einem der vorherigen Ansprüche 2 bis 7, **dadurch gekennzeichnet, dass** die Größe (G) ausgegeben wird.

**9.** Verfahren nach einem der vorherigen Ansprüche, **dadurch gekennzeichnet, dass** die aufgebrachte Bremsenergie (W_a) und die benötigte Bremsenergie (W_b) und/oder die Größe (G) anhand einer Telematik-Schnittstelle an eine Empfangseinheit übertragen werden.

**10.** Verfahren nach einem der vorherigen Ansprüche, **dadurch gekennzeichnet, dass** die Ermittlung der aufgebrachten Bremsenergie (W_a) und der benötigten Bremsenergie (W_b) und/oder die Ermittlung der Größe (G) während des normalen Fahrbetriebs der Fahrzeugkombination erfolgt.

**11.** Verfahren nach einem der vorherigen Ansprüche, **dadurch gekennzeichnet, dass** die Ermittlung der aufgebrachten Bremsenergie (W_a) und der benötigten Bremsenergie (W_b) und/oder die Ermittlung der Größe (G) automatisch erfolgt.

**12.** Verfahren nach einem der vorherigen Ansprüche 2 bis 11, **dadurch gekennzeichnet, dass** ein Bremsvorgang, der auf einer Fahrbahn, deren Längsneigung einen bestimmten Grenzwert überschreitet, stattfindet, nicht zur Ermittlung der Größe (G) berücksichtigt wird.

**13.** Verfahren nach Anspruch 12, **dadurch gekennzeichnet, dass** der Bremsvorgang, der auf einer Fahrbahn, deren Längsneigung einen bestimmten Grenzwert überschreitet, stattfindet, durch einen vor dem Bremsvorgang erfassten Geschwindigkeitsgradienten erkannt wird.

**14.** Verfahren nach einem der vorherigen Ansprüche 2 bis 13, **dadurch gekennzeichnet, dass** eine Abstimmung der Bremsanlagen der Fahrzeugkombination in Abhängigkeit der Größe (G) erfolgt.

**15.** Verfahren nach einem der vorherigen Ansprüche, **dadurch gekennzeichnet, dass** eine Speicherung der aufgebrachten Bremsenergie (W_a) und der benötigten Bremsenergie (W_b) in einem in der Fahrzeugkombination vorhandenen Steuergerät (42) erfolgt und die aufgebrachte Bremsenergie (W_a) und die benötigte Bremsenergie (W_b) über eine Schnittstelle ausgelesen werden.

**16.** Vorrichtung zur Beurteilung der Kompatibilität von Bremsanlagen einer Fahrzeugkombination, wobei die Fahrzeugkombination ein Zugfahrzeug (100) und ein Anhängefahrzeug (50) aufweist, **gekennzeichnet durch** Mittel, die eine aufgebrachte Bremsenergie (W_a) eines Bremsvorgangs des Anhängefahrzeugs (50) ermitteln und eine benötigte Bremsenergie (W_b) des Bremsvorgangs des Anhängefahrzeugs (50) ermitteln.

**Claims**

**1.** Method for assessing the compatibility of braking systems of a vehicle combination, wherein the vehicle combination has a towing vehicle (100) and a trailer vehicle (50), wherein an applied amount of braking energy (W_a) of a braking process of the trailer vehicle (50) is determined, **characterized in that** a required amount of braking energy (W_b) of the braking process of the trailer vehicle (50) is determined.

**2.** Method according to Claim 1, **characterized in that** a variable (G) for assessing the compatibility is determined as a function of the applied amount of braking energy (W_a) and as a function of the required amount of braking energy (W_b).

**3.** Method according to Claim 2, **characterized in that** the variable (G) is determined as a function of a quotient formed from the applied amount of braking energy (W_a) and the required amount of braking energy (W_b).

**4.** Method according to Claim 1, 2 or 3, **characterized in that** the applied amount of braking energy (W_a) is determined as a function of at least one wheel circumferential speed ($_{vRji}$) of a wheel of the trailer vehicle (51-54) and at least one brake cylinder pressure ($p_{Bji}$) of a brake cylinder (38-41) of the trailer vehicle (50).

5. Method according to Claim 4, **characterized in that** the applied amount of braking energy ($W_a$) is determined by means of the formula

$$W_{aj} = k \cdot T \cdot \sum_{i=1}^{n} (p_{Bji} - p_{AN}) \cdot v_{Rji}$$

where $W_{aj}$ denotes the applied amount of braking energy by a brake cylinder (38-41) of the trailer vehicle (50) and the applied amount of braking energy by a wheel (51-54) braked by means of the brake cylinder (38-41), k denotes a constant, T denotes a sampling time of a control device (42) in the vehicle combination, $p_{Bji}$ denotes the pressure prevailing in the brake cylinder (38-41), $p_{AN}$ denotes an application pressure and $v_{Rji}$ denotes a wheel circumferential speed of the wheel (51-54) braked by the brake cylinder (38-41).

6. Method according to one of the preceding claims, **characterized in that** the required amount of braking energy ($W_b$) is determined by means of the formula

$$W_b = \frac{m_A \cdot (v_{An} - v_{A1})^2}{2}$$

where $W_b$ denotes the required amount of braking energy, $m_A$ denotes the mass of the trailer vehicle (50), $v_{A1}$ denotes the speed of the trailer vehicle (50) at the start of the braking process, and $v_{An}$ denotes the speed of the trailer vehicle (50) after the end of the braking process.

7. Method according to one of the preceding Claims 2 to 6, **characterized in that** the variable (G) is determined on the basis of the applied amounts of braking energy ($W_a$) which are determined for a plurality of braking processes, and the required amounts of braking energy ($W_b$) which are determined for the plurality of braking processes.

8. Method according to one of the preceding Claims 2 to 7, **characterized in that** the variable (G) is output.

9. Method according to one of the preceding claims, **characterized in that** the applied amount of braking energy ($W_a$) and the required amount of braking energy ($W_b$) and/or the variable (G) are transmitted to a receiver unit by means of a telematics interface.

10. Method according to one of the preceding claims, **characterized in that** the applied amount of braking energy ($W_a$) and the required amount of braking energy ($W_b$) and/or the variable (G) are determined during the normal driving mode of the vehicle combination.

11. Method according to one of the preceding claims, **characterized in that** the applied amount of braking energy ($W_a$) and the required amount of braking energy ($W_b$) and/or the variable (G) are determined automatically.

12. Method according to one of the preceding Claims 2 to 11, **characterized in that** a braking process which takes place on a roadway whose longitudinal inclination exceeds a specific limiting value is not taken into account for the determination of the variable (G).

13. Method according to Claim 12, **characterized in that** the braking process which takes place on a roadway whose longitudinal inclination exceeds a specific limiting value is detected by a speed gradient which is sensed before the braking process.

14. Method according to one of the preceding Claims 2 to 13, **characterized in that** the braking systems of the vehicle combination are adjusted as a function of the variable (G).

15. Method according to one of the preceding claims, **characterized in that** the applied amount of braking energy ($W_a$) and the required amount of braking energy ($W_b$) are stored in a control device (42) in the vehicle combination, and the applied amount of braking energy ($W_a$) and the required amount of braking energy ($W_b$) are read out via an interface.

16. Device for assessing the compatibility of braking systems of a vehicle combination, wherein the vehicle combination has a towing vehicle (100) and a trailer vehicle (50), **characterized by** means which determine an applied amount of braking energy ($W_a$) of a braking process of the trailer vehicle (50) and determine a required amount of braking energy ($W_b$) of the braking process of the trailer vehicle (50).

**Revendications**

1. Procédé d'évaluation de la compatibilité des systèmes de freinage d'une combinaison de véhicules, la combinaison de véhicules possédant un véhicule tracteur (100) et un véhicule tracté (50), une énergie de freinage appliquée ($W_a$) d'une opération de freinage du véhicule tracté (50) étant déterminée, **caractérisé en ce qu'**une énergie de freinage nécessaire ($W_b$) de l'opération de freinage du véhicule tracté (50) est déterminée.

2. Procédé selon la revendication 1, **caractérisé en ce qu'**une grandeur (G) destinée à évaluer la compatibilité en fonction de l'énergie de freinage appliquée ($W_a$) et en fonction de l'énergie de freinage nécessaire ($W_b$) est déterminée.

3. Procédé selon la revendication 2, **caractérisé en ce que** la grandeur (G) est déterminée en fonction d'un quotient de l'énergie de freinage appliquée ($W_a$) par l'énergie de freinage nécessaire ($W_b$).

4. Procédé selon la revendication 1, 2 ou 3, **caractérisé en ce que** l'énergie de freinage appliquée ($W_a$) est déterminée en fonction d'au moins une vitesse de rotation de roue ($v_{Rji}$) d'une roue du véhicule tracté (51-54) et d'au moins une pression de cylindre de frein ($p_{Bji}$) d'un cylindre de frein (38-41) du véhicule tracté (50).

5. Procédé selon la revendication 4, **caractérisé en ce que** l'énergie de freinage appliquée ($W_a$) est déterminée au moyen de la formule

$$W_{aj} = k \cdot T \cdot \sum^{n} (p_{Bji} - p_{AN}) \cdot v_{Rji}$$

où $W_{aj}$ désigne l'énergie de freinage appliquée par un cylindre de frein (38-41) du véhicule tracté (50) et une roue (51-54) freinée au moyen du cylindre de frein (38-41), k une constante, T un temps de palpage d'un contrôleur (42) présent dans la combinaison de véhicules, $p_{Bij}$ la pression qui règne dans le cylindre de frein (38-41), $p_{AN}$ une pression appliquée et $v_{Rij}$ une vitesse de rotation de roue de la roue (51-54) freinée par le cylindre de frein (38-41).

6. Procédé selon l'une des revendications précédentes, **caractérisé en ce que** l'énergie de freinage nécessaire ($W_b$) est déterminée au moyen de la formule

$$W_b = \frac{m_A \cdot (v_{An} - v_{A1})^2}{2}$$

où $W_b$ désigne l'énergie de freinage nécessaire, $m_A$ la masse du véhicule tracté (50), $v_{A1}$ la vitesse du véhicule tracté (50) au début de l'opération de freinage et $v_{An}$ la vitesse du véhicule tracté (50) après avoir mis fin à l'opération de freinage.

7. Procédé selon l'une des revendications précédentes 2 à 6, **caractérisé en ce que** la grandeur (G) est déterminée à l'aide des énergies de freinage appliquées ($W_a$) déterminées pour une pluralité d'opérations de freinage et des énergies de freinage nécessaires ($W_b$) déterminées pour une pluralité d'opérations de freinage.

8. Procédé selon l'une des revendications précédentes 2 à 7, **caractérisé en ce que** la grandeur (G) est délivrée.

9. Procédé selon l'une des revendications précédentes, **caractérisé en ce que** l'énergie de freinage appliquée ($W_a$) et l'énergie de freinage nécessaire ($W_b$) et/ou la grandeur (G) sont transmises à une unité de réception au moyen d'une interface télématique.

10. Procédé selon l'une des revendications précédentes, **caractérisé en ce que** la détermination de l'énergie de freinage appliquée ($W_a$) et de l'énergie de freinage nécessaire ($W_b$) et/ou la détermination de la grandeur (G) s'effectuent pendant le régime de déplacement normal de la combinaison de véhicules.

11. Procédé selon l'une des revendications précédentes, **caractérisé en ce que** la détermination de l'énergie de freinage appliquée ($W_a$) et de l'énergie de freinage nécessaire ($W_b$) et/ou la détermination de la grandeur (G) s'effectuent automatiquement.

12. Procédé selon l'une des revendications précédentes 2 à 11, **caractérisé en ce qu'**une opération de freinage, qui a lieu sur une chaussée dont l'inclinaison longitudinale ne dépasse pas une valeur limite donnée, n'est pas prise en compte pour la détermination de la grandeur (G).

13. Procédé selon la revendication 12, **caractérisé en ce que** l'opération de freinage, qui a lieu sur une chaussée dont l'inclinaison longitudinale dépasse une valeur limite donnée, est reconnue par un gradient de vitesse détecté avant l'opération de freinage.

14. Procédé selon l'une des revendications précédentes 2 à 13, **caractérisé en ce qu'**un accord des systèmes de freinage de la combinaison de véhicules est effectué en fonction de la grandeur (G).

15. Procédé selon l'une des revendications précédentes, **caractérisé en ce qu'**une mise en mémoire de l'énergie de freinage appliquée ($W_a$) et de l'énergie de freinage nécessaire ($W_b$) est effectuée dans un contrôleur (42) présent dans la combinaison de véhicules et l'énergie de freinage appliquée ($W_a$) ainsi que l'énergie de freinage nécessaire ($W_b$) sont lues par le biais d'une interface.

16. Dispositif d'évaluation de la compatibilité des systèmes de freinage d'une combinaison de véhicules, la combinaison de véhicules possédant un véhicule tracteur (100) et un véhicule tracté (50), **caractérisé par** des moyens qui déterminent une énergie de freinage appliquée ($W_a$) d'une opération de freinage du véhicule tracté (50) et qui déterminent une énergie de freinage nécessaire ($W_b$) de l'opération de freinage du véhicule tracté (50).

Fig. 1

*V1* ～

$S1$

**nein** ← ◇ Brems-vorgang? → **ja**

$v_{A1}$ ～ $S2$

$p_{Bji}, v_{Rji}$ ～ $S3$

～ *V2*

**nein** ← ◇ Brems-vorgang? → **ja**

$S4$

$v_{An}$ ～ $S5$

$$W_a = k \cdot T \cdot \sum_{j=1}^{4} \sum_{i=1}^{i=n} (p_{Bji} - p_{AN}) \cdot v_{Rji}$$ ～ $S6$

$$W_b = \frac{m_A \cdot (v_{An} - v_{A1})^2}{2}$$ ～ $S7$

$$G = \frac{W_a}{W_b}$$ ～ $S8$

*Fig. 2*

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2005058665 A1
- EP 1359076 A1
- DE 4243245 A1